# EUROPÄISCHE PATENTSCHRIFT

(11) **EP 2 157 449 B1**
(45) Veröffentlichungstag und Bekanntmachung des Hinweises auf die Patenterteilung: **25.05.2011**
(21) Anmeldenummer: 08105092.4
(22) Anmeldetag: 21.08.2008
(51) Int. Cl.: G01V 8/14

(54) **Lichtgitter**
Light grid
Barrière lumineuse

(43) Veröffentlichungstag der Anmeldung: 24.02.2010
(73) Patentinhaber: SICK AG, 79183 Waldkirch (DE)
(72) Erfinder: Meyer, Christof J., 79261 Bleibach (DE); Wüstefeld, Martin, 79350 Sexau (DE); Friedrich, Ralf, 79189 Biengen (DE)
(74) Vertreter: Ludewigt, Christoph

(56) Entgegenhaltungen:
- EP-A- 1 566 588
- DE-A1- 10 308 085
- DE-C1- 4 305 195
- FR-A- 2 588 385

## Beschreibung

Die Erfindung betrifft eine Vorrichtung nach dem Oberbegriff des Anspruchs 1.

Aus der DE 103 08 085 B4 ist ein Lichttaster zur Erfassung von Objekten in einem Überwachungsbereich bekannt. In der Frontseite des Gehäuses ist eine Frontscheibe integriert, wobei als Bestandteil der Frontscheibe wenigstens eine Umlenkeinheit vorgesehen ist. Die Umlenkeinheit kann als Prisma ausgebildet sein. Dabei werden die Sendelichtstrahlen und Empfangslichtstrahlen an einer in einem Winkel von 45° zur Ebene der Frontscheibe verlaufenden ersten Grenzfläche des Prismas total reflektiert. Durch diese Umlenkeinheit werden die die Frontscheibe in rechtem Winkel durchsetzenden Sendelichtstrahlen und Empfangslichtstrahlen um 90° abgelenkt, so dass diese innerhalb des Gehäuses in einer Ebene parallel zur Frontscheibe verlaufen. Die Sende- bzw. Empfangsfläche von Sendern bzw. Empfängern muss dann jedoch senkrecht zu einer Leiterplatte ausgerichtet sein, wodurch Sender und Empfänger von der Leiterplatte abstehen, was sich sehr nachteilig auf die Baugröße auswirkt.

Aus der DE 28 01 447 C2 ist ein optoelektronisches Gerät mit einem Gehäuse, mit optoelektronischen Bauelementen und mit einer Leiterplatte bekannt, bei dem der Strahlengang von abzustrahlendem oder von zu empfangendem Licht parallel zur Ebene der Leiterplatte verläuft. Im Innern des Gehäuses ist ein Strahlumlenker vorgesehen zur Umlenkung des Strahlengangs des parallel zur Leiterplatte abgestrahlten oder einfallenden Lichts auf wenigstens ein optoelektronisches Bauelement, das auf der Leiterplatte befestigt ist. Die Strahlumlenkung erfolgt dabei durch Totalreflexion, beispielsweise an einem Reflektor.

Nachteilig bei dem genannten Stand der Technik ist, dass alles Licht umgelenkt wird und somit auch schräg einfallendes Licht entweder direkt oder nach Streuung auf der Leiterplatte oder einer Gehäuseinnenseite in das Empfangselement gelangen kann.

Aus der DE 43 05 195 C1 ist ein Fotodetektor zur Erfassung von Gegenständen innerhalb eines Ansprechbereichs bekannt. Zur Messung einer Verschmutzung eines strahlteilenden Elements, beispielsweise eines Prismas, wird durch Verschmutzung gestreutes Licht durch einen Empfänger detektiert.

Der Erfindung liegt die Aufgabe zugrunde, einen verbesserten optoelektronischen Sensor bereitzustellen, bei dem weniger Streulicht ausgesendet bzw. empfangen wird. Eine weitere Aufgabe besteht darin, eine gegenseitige Beeinflussung benachbarter Strahlen zu verhindern. Eine weitere Aufgabe besteht darin, einen sicheren optoelektronischen Sensor bereitzustellen, der einschlägigen Sicherheitsnormen wie den Europäischen Normen EN 61496, EN 945-1 oder deren Nachfolgenorm EN 13849-1 entspricht.

Die vorliegende Aufgabe wird gelöst durch einen optoelektronischen Sensor zur Erfassung von Objekten in einem Überwachungsbereich mit wenigstens einem Gehäuse, mit wenigstens einem einen Sendelichtstrahlen emittierenden Sender mit einem Sendeelement und mit einer Steuereinheit zur Ansteuerung des Senders und/oder wenigstens einem einen Empfangslichtstrahlen empfangenden Empfänger mit einem Empfangselement und mit einer Auswerteeinheit zur Generierung eines Objektfeststellungssignals in Abhängigkeit von am Ausgang des Empfängers anstehenden Empfangssignale. Der Sensor weist weiterhin eine Leiterplatte auf, wobei eine optische Achse der Empfangslichtstrahlen und/oder Sendelichtstrahlen zumindest bereichsweise etwa parallel zu der Leiterplatte geführt ist. Die Leiterplatte, eine Sendefläche des Sendeelements und/oder eine Empfangsfläche des Empfangselements verlaufen etwa parallel zueinander. Wenigstens ein Prisma ist als Umlenkeinheit für die Sende- oder Empfangslichtstrahlen um etwa 90° aufgrund von Totalreflexion, in einem Abstand von 0 mm bis 3 mm vor dem

Sende- oder Empfangselement angeordnet. Das Prisma weist eine Brechzahl größer 1,4 auf.

Durch die geometrische Anordnung des Prismas vor einem Empfangselement werden schräg einfallende Lichtstrahlen, beispielsweise Störlicht von fremden Lichtquellen oder von Reflexionen innerhalb des Gehäuses nicht in das Empfangselement eingekoppelt. Diese schräg einfallenden Lichtstrahlen treffen zwar über eine Reflexion oder Remission auf der Leiterplatte oder einer Gehäuseinnenfläche auf das Prisma, jedoch aufgrund der fehlenden Totalreflexion nicht auf das Empfangselement.

Im Falle der Anordnung des Prismas vor einem Sendelement werden nur die gewünschten Nutzstrahlen über das Prisma aufgrund der Totalreflexion ausgesendet. Von einem vorgegebenen Winkel abweichende Lichtstrahlen werden nicht totalreflektiert und gelangen nicht in einen vorgesehenen Strahlengang.

Aufgrund der Totalreflexion wird also sowohl im Falle der Anordnung des Prismas vor dem Empfangselement als auch vor dem Sendeelement eine Trennung von Nutzlicht und Störlicht durchgeführt. Durch den Grenzwinkel der Totalreflexion wird im Wesentlichen nur das Nutzlicht total reflektiert und das Störlicht nicht. Dadurch trifft das Störlicht nicht auf das Empfangselement bzw. wird nicht entlang der optischen Achse vom Sender ausgesendet.

Durch die erfindungsgemäße Anordnung ist es nicht mehr notwendig, einen Tubus als Lichtfalle vor dem Sende- oder Empfangselement anzuordnen, wie dies beispielsweise aus der DE 44 30 778 C2 bekannt ist. Somit können an Stelle des Tubus elektronische Bauteile angeordnet werden, wodurch der Sensor kompakter herstellbar ist. Auch ist es nicht notwendig, diese elektronischen Bauteile, die in der Nähe der optischen Achse angeordnet sind, zur Absorption von Lichtstrahlen zu schwärzen oder abzudecken. Die erfindungsgemäße optische Anordnung des Prismas erlaubt höhere Toleranzen und geringere Anforderungen an eine Montagegenauigkeit als die Verwendung eines Tubus. Dadurch kann bei der Herstellung auf einen kompletten Prüfschritt einer Optikbaugruppe verzichtet werden.

Durch die nahe Anordnung des Prismas in einem Abstand von 0 mm bis 3 mm zu dem Sende- oder Empfangselement kann die Anordnung des Prismas größere Toleranzwerte ausgleichen, da sich eine Dejustage nur gering auf die Wirkungsweise der optischen Strahlumlenkung auswirkt. Das Prisma kann dabei gegenüber dem Sende- oder Empfangselement leicht verschoben, verdreht oder verkippt sein, ohne dass es zu einer Einschränkung der Funktion des Prismas kommt. Dadurch sind an die Positionierung des Prismas keine hohen Anforderungen gestellt, wodurch die Herstellung des optoelektronischen Sensors wirtschaftlicher erfolgt.

Weiter ist durch die Anordnung des Prismas vor dem Empfangselement gewährleistet, dass Störlicht nur vor dem Prisma auftreten kann. Alle auftretenden Störstrahlen, die möglicherweise in das Empfangselement gelangen können, treten jedoch durch das Prisma hindurch und werden nicht auf das Empfangselement gelenkt. Das Prisma wirkt dadurch wie ein optisches Filter für Lichtstrahlen, die nicht in einer gewünschten Richtung auf das Prisma treffen. Ein Auftreten von Störstrahlen zwischen dem Prisma und dem Empfangselement ist durch den geringen Abstand auf ein Minimum reduziert.

Erfindungsgemäß werden Prismen mit einer möglichst hohen Brechzahl eingesetzt, da sich der Winkel der Totalreflexion mit steigender Brechzahl gemäß dem Snelliusschen Brechungsgesetz verringert. Um diesen Effekt verstärkt zu nutzen, ist es vorgesehen, dass das Prisma eine Brechzahl größer 1,4 aufweist.

Vorteilhaft besteht das Prisma aus Polymethylmethacrylat (PMMA) oder Polycarbonat (PC). Diese Kunststoffe haben eine bevorzugt hohe Brechzahl. Im Falle von Polymethylmethacrylat beträgt die Brechzahl etwa 1,45 und im Falle von Polycarbonat etwa 1,58. Weiter ist es vorgesehen, ein Prisma aus Glas einzusetzen, mit dem Brechzahlen von 1,45 bis 2,14 erreichbar sind. Besonders bevorzugt ist die Brechzahl des Prismas größer 1,5.

Zwischen dem Sender oder dem Empfänger und dem Prisma ist bevorzugt eine erste Blende zur Begrenzung des Öffnungswinkels einer ausgesendeten Sendelichtkeule oder einem keulenförmigen Empfangsbereich vorgesehen, um eine Justage des Senders und des Empfängers zu erleichtern und um sicherheitstechnische Normanforderungen zu erfüllen. Dadurch wird ein gewünschter Sendelichtstrahldurchmesser und ein Abstrahlwinkel der Sendelichtstrahlen direkt nach dem Sender wirkungsvoll eingestellt. Durch diese erste Blende wird unerwünschtes Sendelicht bereits direkt an dem Lichtsender wirkungsvoll unterdrückt. Beim Empfänger wird das möglicherweise dennoch vorhandene Reststreulicht im Gehäuse durch diese erste Blende abgeschirmt, so dass dieses Streulicht nicht in den Empfänger gelangen kann. Durch diese erste Blende wird damit wirksam ein erlaubter Verschwenkwinkel von ca. +/-2,5° oder +/-5° des Senders oder des Empfängers je nach geforderter Sicherheitskategorie eingestellt.

In Weiterbildung der Erfindung ist eine zweite Blende zur Vermeidung von optischem Übersprechen von Kanälen vorhanden. Insbesondere bei einem Lichtgitter mit sehr vielen Strahlen soll ein Übersprechen der einzelnen Sender/Empfängerpaare vermieden werden. Hierzu wird die zweite Blende in einem Abstand von ca. 0 mm bis 4 mm vor dem Prisma angeordnet, wodurch Licht eines benachbarten Lichtgitterpaares nicht in den benachbarten optischen Pfad gelangen kann. Bevorzugt ist die zweite Blende direkt vor dem Prisma angeordnet. Der Blendendurchmesser ist dabei kleiner als der Durchmesser einer dort ebenfalls angeordneten Linse. Der Abstand zwischen Blende und Prisma ist abhängig vom Abstand der Sender- bzw. Empfängerachsen voneinander.

In Weiterbildung der Erfindung ist vor der zweiten Blende eine weitere dritte Blende zur Begrenzung des Strahlendurchmessers angeordnet. Durch diese dritte Blende wird im Wesentlichen das Sensordetektionsvermögen oder auch die Auflösung des Sensors bestimmt, wenn der optoelektronische Sensor als Lichtgitter mit einer Vielzahl von Strahlen ausgebildet ist. Die Auflösung des Lichtgitters wird durch den Abstand der Sender-/Empfängerpaare zueinander und durch den Strahldurchmesser bestimmt. Die Auflösung erhält man durch Addition des Strahldurchmessers und des Strahlachsabstandes. Zum Erfassen von Fingern einer Hand ist beispielsweise ein Strahldurchmesser von ca. 6,5 mm vorgesehen, wobei die Strahlachsabstände ca. 7,5 mm betragen. Dadurch wird eine Auflösung von 14mm erreicht, da hierbei immer ein Lichtstrahl komplett abgedeckt ist. Auch ein Strahldurchmesser von 4 mm und ein Achsabstand von 10 mm führt zu einer Auflösung von 14 mm.

In Weiterbildung ist die dritte Blende und das Gehäuse einstückig ausgebildet. Dadurch wird die Herstellung des Sensors vereinfacht. In dem Gehäuse sind dabei beispielsweise Blendenöffnungen für eine hohe Auflösung von 14 mm vorgesehen. Bei gewünschten geringeren Auflösungen von 20 mm, 30 mm, 40 mm oder noch geringeren Auflösungen werden nur die notwendigen Sender/Empfängerpaare bestückt. Hierdurch ist es möglich, ein einziges Sensorgehäuse für eine Vielzahl von Lichtgittervarianten bereitzustellen.

In Weiterbildung der Erfindung ist vor dem Prisma eine Linse angeordnet zur Strahlformung, insbesondere in einem Abstand von 5 mm bis 20 mm. Durch die Linse wird ein erlaubter Winkel des eintretenden bzw. austretenden Lichts begrenzt. Die Linse weist einen Durchmesser von 4 bis 8 mm auf und bevorzugt etwa 6 mm bei einer Brennweite von etwa 16 mm. Mit Hilfe der Linse wird ein Empfangs- bzw. Sendelichtkegelwinkel auf +/-2,5° nach Sicherheitskategorie 4 oder +/-5° nach Sicherheitskategorie 2 gemäß den Europäischen Normen EN 61496, EN 945-1 oder deren Nachfolgenorm EN 13849-1 eingestellt.

In einer besonderen Ausführungsform ist vor dem Prisma und den übrigen optischen Elementen eine Frontscheibe angeordnet. Die Frontscheibe dient dem Schutz des optischen Sensors vor Verschmutzungen und Beschädigungen. Die Frontscheibe kann zusätzlich mit einem optischen Filter versehen sein. So ist es beispielsweise bei der Verwendung von infraroter Strahlung vorgesehen, eine Frontscheibe einzusetzen, welche nur für Infrarotlicht durchlässig ist und den Eintritt von Fremdlicht anderer Wellenlängen bereits beim Eintritt in das Gehäuse wirksam verhindert.

In Weiterbildung der Erfindung ist ein Optikträger zur Aufnahme wenigstens der Linse und des Prismas einstückig ausgebildet. Dadurch ist die geometrische Zuordnung der Linse zu dem Prisma durch den einstückigen Optikträger genau gewährleistet. Eine zusätzliche Justage während der Produktion des Sensors entfällt hierdurch. Auch die übrigen optischen Komponenten können zur Aufnahme in dem Optikträger berücksichtigt werden. Dadurch werden montagebedingte Toleranzen minimiert. In einer besonderen Ausführungsform der Erfindung sind die Blenden einstückig mit dem Optikträger ausgebildet, dadurch ist die Anzahl einzelner optischer Komponenten auf ein Minimum reduziert.

In einer besonderen Ausführungsform der Erfindung ist der Sender oder Empfänger in der Leiterplatte integriert. Dadurch kann der optoelektronische Sensor noch kompakter hergestellt werden. Weiter ist es dadurch möglich, die direkt nach dem Sende- bzw. Empfangselement angeordnete erste Blende direkt flach auf der Leiterplatte anzuordnen.

Im Folgenden wird die Erfindung an Hand von Ausführungsbeispielen unter Bezugnahme auf die Zeichnung im Einzelnen erläutert.

In der Zeichnung zeigt:
- Figur 1: eine schematische Darstellung eines Gehäuses mit einem Sender oder Empfänger gemäß der vorliegenden Erfindung;
- Figur 2 bis 4: eine schematische Darstellung der Strahlengänge auf einen Emp- fänger zur Verdeutlichung der Erfindung;
- Figur 5: einen maximalen Akzeptanzwinkel des Prismas in Abhängigkeit einer Brechzahl.

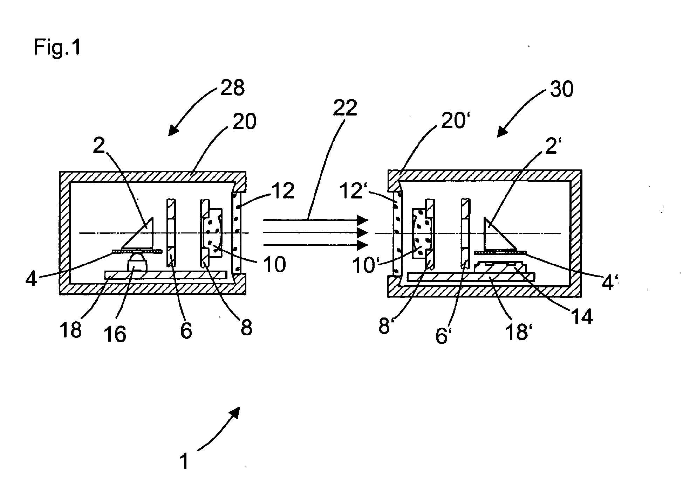

Figur 1 zeigt einen erfindungsgemäßen optoelektronischen Sensor 1 bestehend aus einem Sender 28 und einem Empfänger 30, welche im Querschnitt dargestellt sind. Der Sender 28 und der Empfänger 30 sind gegenüberliegend angeordnet. Derartige optoelektronische Sensoren können als Einweglichtschranke oder als Lichtgitter ausgebildet sein. Im Falle von Lichtgittern sind eine Vielzahl von Sendern 28 und/oder Empfängern 30 in einer Reihe nebeneinander in einem leistenförmigen Gehäuse untergebracht. Dabei arbeiten Sender 28 und gegenüberliegende Empfänger 30 paarweise zusammen.

Der Sender 28 und der Empfänger 30 sind jeweils von einem Gehäuse 20 bzw. 20' umschlossen. Eine Lichtaustrittsseite des Sensors ist mit einer Frontscheibe 12 bzw. 12' versehen. Eine Leiterplatte 18 bzw. 18' mit dem optischen Element ist in dem Gehäuse in einem Winkel von 90° zur Frontscheibe 12 bzw. 12' angeordnet. Auf der Leiterplatte ist ein optisches Sende- 16 oder Empfangselement 14 angeordnet.

Auf der Leiterplatte 18 ist das Sendeelement 16, beispielsweise eine Sendediode angeordnet. In Strahlrichtung direkt nach der Sendediode ist eine erste Blende 4 zur Begrenzung des Öffnungswinkels vorgesehen. Ein breiter Öffnungswinkel der Sendediode von beispielsweise 30° wird durch die Blende 4 wirksam auf beispielsweise 2,5° oder 5° eingeschränkt. Nach der Blende 4 ist ein Prisma 2 angeordnet. Das Prisma 2 dient der Strahlumlenkung um 90°. Die Strahlumlenkung erfolgt dabei aufgrund von Totalreflexion an der Grenzfläche des Prismas 2. Das Prisma 2 ist dabei so angeordnet, dass unerwünschte seitliche Lichtstrahlen ausgehend von dem Sendelement 16 nicht mehr unter dem Totalreflexionswinkel auf dem Prisma auftreffen und demnach nicht umgelenkt werden, sondern an der Grenzfläche des Prismas 2 austreten und auf die Gehäuseinnenwand gelenkt werden. Die ordnungsgemäß umgelenkten Lichtstrahlen treten in Richtung einer zweiten Blende 6 aus dem Prisma 2 aus.

Wenn bei einer Lichtgitterleiste eine Vielzahl von Sendeelementen nebeneinander angeordnet sind, dient die zweite Blende zur Vermeidung von optischem Übersprechen von einzelnen Sendekanälen. Insbesondere wenn die einzelnen Sender mit den Sendeachsen sehr dicht nebeneinander angeordnet sind besteht die Gefahr, dass schräg ausgesendetes Licht in den Nachbarkanal gelangt, was aber durch die zweite Blende verhindert wird.

In Strahlrichtung nachfolgend zu der zweiten Blende 6 ist eine weitere dritte Blende 8 angeordnet zur Begrenzung des Strahldurchmessers, bevor das Licht auf eine

Linse 10 trifft. Der Strahldurchmesser ist dabei wichtig, da durch den Strahldurchmesser zusammen mit dem Abstand der Sender, eine Auflösung des Lichtgitters festgelegt wird. Je größer der Strahldurchmesser und je größer die Strahlabstände, desto geringer ist die Auflösung des Lichtgitters.

Vor der dritten Blende 8 ist die Linse 10 zur Strahlformung vorgesehen. Mit Hilfe der Linse 10 wird die Abstrahlcharakteristik des austretenden Sendelichts bestimmt. Die Linse 10 ist vorzugsweise als Kunststofflinse ausgebildet. Im Falle eines Lichtgitters ist die Linse 10 als Linsenreihe mit einer Vielzahl von Linsen ausgebildet.

Der Empfänger 30 gemäß Figur 1 ist analog zu dem Sender 28 aufgebaut. Die von dem Sender 28 ausgehenden Lichtstrahlen 22 treffen als Empfangslichtstrahlen zusammen mit möglicherweise zusätzlichem Fremdlicht durch die Frontscheibe 12' des Empfängers 30 auf eine Linse 10'. Die Linse 10' dient zur Fokussierung des empfangenen Lichts. Eine nachfolgende dritte Blende 8' dient zur Begrenzung des Strahldurchmessers. Die zweite Blende 6' verhindert ein optisches Übersprechen von Kanälen bei mehreren nebeneinander liegenden Empfangsachsen.

Das eintreffende Licht trifft nach der zweiten Blende 6' auf das Prisma 2'. Von dem Prisma 2' werden nur die Lichtstrahlen mit einem vorgesehenen Einfallswinkel aufgrund von Totalreflexion umgelenkt. Lichtstrahlen des Fremdlichts, die an der Innenseite des Gehäuses 20' oder auf der Leiterplatte 18' reflektiert werden und nach Reflexion auf das Prisma 2' treffen, werden nicht totalreflektiert und verlassen das Prisma 2', wobei die Lichtstrahlen auf die Gehäuseinnenfläche treffen und nicht in das Empfangselement 14 gelangen. Das eintretende Nutzlicht wird nach Totalreflexion an dem Prisma 2' noch von einer weiteren ersten Blende 4' begrenzt. Danach tritt das zum Empfang vorgesehene Licht auf das Empfangselement 14 zu einer Auswertung durch eine nicht dargestellte Auswerteeinheit.

Abgesehen von den Empfangs- 14 und den Sendelementen 16 sind die optischen Komponenten im Sender 28 und Empfänger 30 identisch ausgeführt. Dadurch ist eine kostengünstige und einfachere Herstellung des optoelektronischen Sensors 1 oder Lichtgitters möglich. Lediglich die Leiterplatten 18 und 18' mit den jeweiligen Sende- 16 oder Empfangselementen 14 unterscheiden sich. Werden im Falle eines Lichtgitters in den Leisten jedoch sowohl Sender 28 und Empfänger 30 abwechselnd alternierend vorgesehen, können die Leisten einschließlich der elektronischen Bauelemente und der Leiterplatte 18 und 18' identisch ausgeführt werden, da sowohl jeweils eine Steuereinheit für die Sender 28 als auch eine Auswerteeinheit für die Empfänger 30 vorgesehen ist.

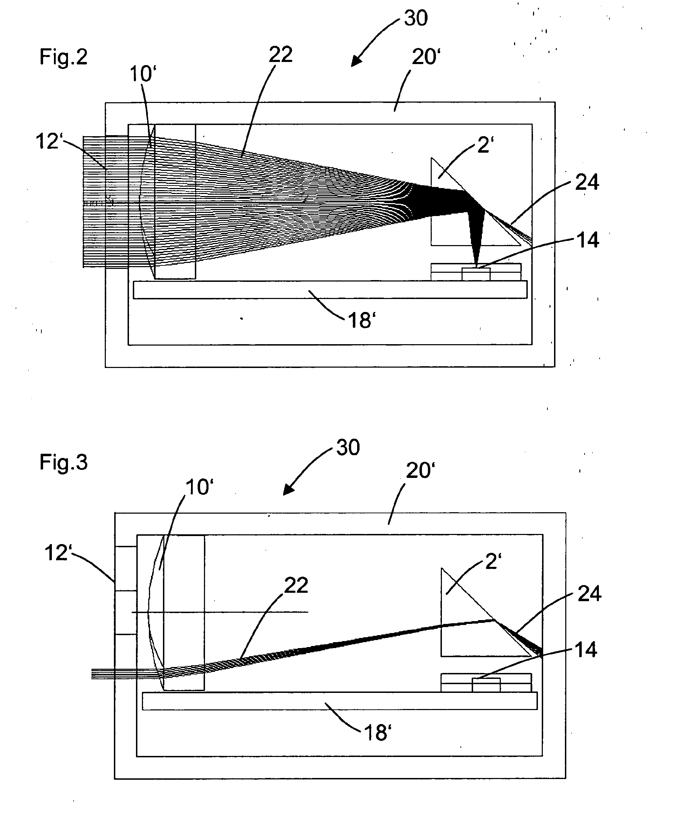

Figur 2 zeigt eine schematische Querschnittsdarstellung des Empfängers 30 ohne Blenden mit dargestellten empfangenen Lichtstrahlen 22. Die Lichtstrahlen 22 werden in die Linse 10' eingekoppelt. Nach einer Fokussierung durch die Linse 10' treffen die Lichtstrahlen gebündelt auf das Prisma 2'. Die optische Achse des einfallenden Lichts verläuft dabei parallel zu der Leiterplatte 18'. Ein gewünschter Teil, des empfangenen Lichts wird aufgrund von Totalreflexion auf das Empfangselement umgelenkt. Ein unerwünschter Teil der Lichtstrahlen 22 wird nicht von dem Prisma 2' abgelenkt und gelangt nicht in das Empfangselement, sondern trifft als Lichtstrahlen 24 auf die Gehäuseinnenseite. Der Winkel der Totalreflexion hängt dabei von dem verwendeten Werkstoff des Prismas 2' ab. Je höher die Brechzahl des Werkstoffes des Prismas 2' gegenüber Luft ist, desto höher ist der maximale Akzeptanzwinkel bei der Totalreflexion.

Figur 3 zeigt einen Teil der Lichtstrahlen 22 gemäß Figur 2, der aufgrund fehlender Totalreflexion nicht von dem Prisma 2' abgelenkt wird. Ein Teil des empfangenen Lichtkegels, insbesondere ein Teil der Randlichtstrahlen, wird somit nicht dem Empfangselement 14 zugeführt, sondern verlässt das Prisma als Lichtstrahlen 24. Es handelt sich dabei um den Teil des Lichtes der nahe und parallel zu der Leiterplatte geführt ist, welcher aufgrund von möglichen Reflexionen nicht in das Empfangselement gelangen soll.

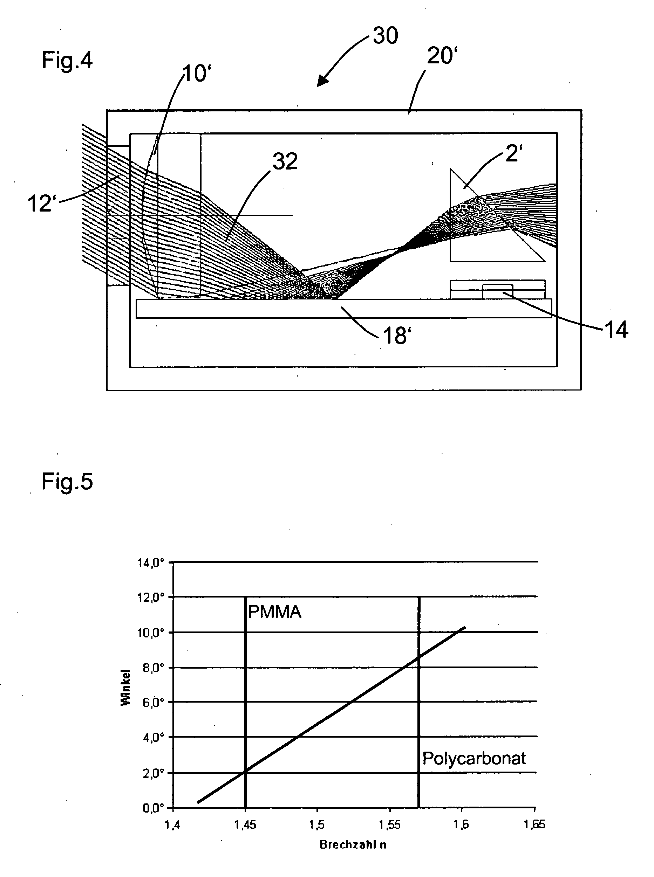

Figur 4 zeigt eine Einkopplung von unerwünschtem Fremdlicht in den Empfänger 30. Das Fremdlicht 32 trifft mit einem größeren Einfallswinkel auf die Linse 10' als das Nutzlicht gemäß Figur 3. Das Fremdlicht 32 wird zunächst durch die Linse 10' fokussiert und trifft dabei auf die Leiterplatte 18'. Nach einer Reflexion auf der Leiterplatte 18' wird das Licht in das Prisma 2' eingekoppelt. Aufgrund des unterschiedlichen Einfallwinkels gegenüber dem Nutzlicht aus Figur 3 wird das Fremdlicht 32 nicht totalreflektiert und gelangt nicht in das Empfangselement 14, sondern trifft lediglich auf die Gehäuseinnenfläche.

Das Prisma 2' braucht dabei gegenüber dem Empfangselement 14 nicht exakt positioniert werden. Es reicht aus, wenn das Prisma 2' mit einer gewissen Toleranz vor dem Empfangselement 14 angeordnet wird.

Durch die Anordnung des Prismas 2' unmittelbar vor dem Empfangselement 14 ist gewährleistet, dass das Fremdlicht nicht zwischen das Empfangselement 14 und dem Prisma 2' eindringt und somit nur vor dem Prisma 2' auftreten kann. Das Fremdlicht, das vor dem Prisma 2' auftritt, hat auch keine negativen Auswirkungen auf eine Sensorfunktion. Die Fremdlichtstrahlen durchdringen das Prisma 2' und werden nicht total reflektiert, sondern treten auf einer Rückseite des Prismas 2' aus und treffen lediglich auf das Gehäuse 20'. Das Prisma 2' wirkt somit als optisches Filter für das Fremdlicht. Ein Auftreten von Fremdlichtstrahlen zwischen dem Prisma 2' und dem Empfangselement 14 ist durch den geringen Abstand auf ein Minimum reduziert. Je dichter das Prisma vor dem Empfangselement angeordnet ist, desto besser wird das Empfangselement vor Fremdlicht geschützt.

Aufgrund der erfindungsgemäßen räumlichen Anordnung des Prismas 2' wird in dem optoelektronischen Sensor keine Lichtfalle in Form eines Tubus benötigt. Lediglich das gewünschte Nutzlicht wird aufgrund der Totalreflexion in einem gewünschten Winkelbereich in das Empfangselement 14 umgelenkt. Auch Lichtstrahlen, die mehr und mehr in Richtung des Grenzwinkels der Totalreflexion auf das Prisma 2' treffen werden zwar durch das Prisma 2' umgelenkt, jedoch treffen auch diese Strahlen an dem Empfangselement vorbei auf die Leiterplatte 18' oder die Gehäuseinnenfläche.

Figur 5 zeigt einen maximalen Akzeptanzwinkel von zwei Prismen aus den Werkstoffen Polymethylmethacrylat (PMMA) und Polycarbonat (PC). Das Prisma aus PMMA weist einen Akzeptanzwinkel von 2° auf. Das Prisma aus Polycarbonat einen Akzeptanzwinkel von etwas mehr als 8° aufgrund der höheren Brechzahl des Werkstoffes.

### Bezugszeichen:

- 1: optoelektronischer Sensor
- 2, 2': Prisma
- 4, 4': erste Blende
- 6, 6': zweite Blende
- 8, 8': dritte Blende
- 10, 10': Linse
- 12, 12': Frontscheibe
- 14: Empfangselement
- 16: Sendelement
- 18, 18': Leiterplatte
- 20,: 20' Gehäuse
- 22: Lichtstrahlen
- 24: Lichtstrahlen
- 28: Sender
- 30: Empfänger
- 32: Fremdlicht

## Patentansprüche

1. Optoelektronischer Sensor zur Erfassung von Objekten in einem Überwachungsbereich
mit wenigstens einem Gehäuse (20, 20'),
mit wenigstens einem einen Sendelichtstrahlen emittierenden Sender (28) mit einem Sendeelement (16) und mit einer Steuereinheit zur Ansteuerung des Senders (28)
und/oder wenigstens einem einen Empfangslichtstrahlen empfangenden Empfänger (30) mit einem Empfangselement (14) und mit einer Auswerteeinheit zur Generierung eines Objektfeststellungssignals in Abhängigkeit von am Ausgang des Empfängers (30) anstehenden Empfangssignale,
mit einer Leiterplatte (18, 18'), wobei eine optische Achse der Empfangslichtstrahlen oder Sendelichtstrahlen zumindest bereichsweise etwa parallel zu der Leiterplatte (18, 18') geführt ist,
die Leiterplatte, eine Sendefläche des Sendeelements und/oder eine Empfangsfläche des Empfangselements etwa parallel zueinander verlaufen,
**dadurch gekennzeichnet,**
**dass** wenigstens ein Prisma (2, 2') als Umlenkeinheit für die Sende- und/oder Empfangslichtstrahlen um etwa 90° aufgrund von Totalreflexion, in einem Abstand von 0 mm bis 3 mm vor dem Sende- und/oder Empfangselement angeordnet ist und das Prisma (2, 2') eine Brechzahl größer 1,4 aufweist.

2. Optoelektronischer Sensor nach Anspruch 1, **dadurch gekennzeichnet, dass** das Prisma (2, 2') aus Polymethylmethacrylat (PMMA), Polycarbonat (PC) oder Glas besteht.

3. Optoelektronischer Sensor nach einem der vorhergehenden Ansprüche, **dadurch gekennzeichnet, dass** zwischen dem Sendeelement (16) oder dem Empfangselement (14) und dem Prisma (2, 2') eine erste Blende (4, 4') zur Begrenzung des Öffnungswinkels vorgesehen ist.

4. Optoelektronischer Sensor nach einem der vorhergehenden Ansprüche, **dadurch gekennzeichnet, dass** vor dem Prisma (2, 2') eine zweite Blende (6, 6') zur Vermeidung von optischem Übersprechen von Kanälen vorhanden ist.

5. Optoelektronischer Sensor nach einem der vorhergehenden Ansprüche, **dadurch gekennzeichnet, dass** vor der Blende (6, 6') eine weitere dritte Blende (8, 8') zur Begrenzung des Strahlendurchmessers angeordnet ist.

6. Optoelektronischer Sensor nach einem der vorhergehenden Ansprüche, **dadurch gekennzeichnet, dass** die dritte Blende (8, 8') und das Gehäuse (20, 20') einstückig ausgebildet sind.

7. Optoelektronischer Sensor nach einem der vorhergehenden Ansprüche, **dadurch gekennzeichnet, dass** vor dem Prisma (2, 2') eine Linse (10, 10') zur Strahlformung angeordnet ist, insbesondere im Abstand von 5 mm bis 20 mm.

8. Optoelektronischer Sensor nach einem der vorhergehenden Ansprüche, **dadurch gekennzeichnet, dass** die Linse (10, 10') einen Durchmesser von 4 bis 8 mm, und bevorzugt etwa 6 mm bei einer Brennweite von etwa 16 mm aufweist.

9. Optoelektronischer Sensor nach einem der vorhergehenden Ansprüche, **dadurch gekennzeichnet, dass** vor dem Prisma (2, 2') eine Frontscheibe (12, 12') angeordnet ist.

10. Optoelektronischer Sensor nach einem vorhergehenden Ansprüche, **dadurch gekennzeichnet, dass** ein einstückiger Optikträger zur Aufnahme wenigstens der Linse (10, 10') und des Prismas (2, 2') angeordnet ist.

11. Optoelektronischer Sensor nach einem vorhergehenden Ansprüche, **dadurch gekennzeichnet, dass** das Sendeelement (16) und/oder Empfangselement (14) in der Leiterplatte (18, 18') integriert ist.

12. Optoelektronischer Sensor nach einem der vorhergehenden Ansprüche, **dadurch gekennzeichnet, dass** dieser als Lichtgitter ausgebildet ist, mit einer Vielzahl beabstandeter Sender-Empfängerpaare (28, 30).

## Claims

1. An optoelectronic sensor for the detection of objects in a monitored zone
having at least one housing (20, 20'),
having at least one transmitter (28) which emits transmission light beams, which has a transmission element (16) and which has a control unit for the control of the transmitter (28) and/or at least one receiver (30) which receives reception light beams, which has a reception element (14) and which has an evaluation unit for generating an object determination signal in dependence on received signals present at the output of the receiver (30),
having a circuit board (18, 18'), wherein an optical axis of the receiving light beams or of the transmission light beams is guided, at least partly, approximately parallel to the conductor board (18, 18'), the conductor board, a transmission surface of the transmission element and/or a reception surface of the reception element running approximately in parallel to one another,
**characterized in that**,
at least one prism (2, 2') is arranged at a separation distance of 0 mm to 3 mm in front of the transmission element and/or the reception element as a deflection unit for deflecting the transmission light beams and/or the receiving light beams by approximately 90° due to total reflection and **in that** the prism (2, 2') has a refractive index of larger than 1.4.

2. An optoelectronic sensor in accordance with claim 1, **characterized in that** the prism (2, 2') is composed of either polymethylmethacrylate (PMMA), or of polycarbonate (PC) or of glass.

3. An optoelectronic sensor in accordance with one of the preceding claims, **characterized in that** a first aperture (4, 4') for the restriction of the opening angle is provided between either of the transmission element (16) or of the reception element (14) and the prism (2, 2').

4. An optoelectronic sensor in accordance with any one of the preceding claims, **characterized in that** a second aperture (6, 6') is present in front of the prism (2, 2') for the avoidance of optical cross-talk of channels.

5. An optoelectronic sensor in accordance with any one of the preceding claims, **characterized in that** a further third aperture (8, 8') is arranged in front of the aperture (6, 6') for the restriction of the beam diameter.

6. An optoelectronic sensor in accordance with any one of the preceding claims, **characterized in that** the third aperture (8, 8') and the housing (20, 20') are formed as one piece.

7. An optoelectronic sensor in accordance with any one of the preceding claims, **characterized in that** a lens (10, 10') is arranged in front of the prism (2, 2') for the beam formation, is in particular arranged at a distance of 5 mm to 20 mm.

8. An optoelectronic sensor in accordance with any one of the preceding claims, **characterized in that** the lens (10, 10') has a diameter of 4 to 8 mm and preferably of approximately 6 mm at a focal length of approximately 16 mm.

9. An optoelectronic sensor in accordance with any one of the preceding claims, **characterized in that** a front screen (12, 12') is arranged in front of the prism (2, 2').

10. An optoelectronic sensor in accordance with any one of the preceding claims, **characterized in that** an optical support made from one piece is arranged for the reception of at least the lens (10, 10') and the prism (2, 2').

11. An optoelectronic sensor in accordance with any one of the preceding claims, **characterized in that** the transmission element (16) and/or the reception element (14) is/are integrated into the circuit board (18, 18').

12. An optoelectronic sensor in accordance with any one of the preceding claims, **characterized in that** the sensor is designed as a light grid having a plurality of transmitter-receiver pairs (28, 30) spaced apart from one another.

## Revendications

1. Capteur optoélectronique pour détecter des objets dans une zone de surveillance
comprenant au moins un boîtier (20, 20'),
comprenant au moins un émetteur (28) qui émet des rayons de lumière émise, avec un élément émetteur (16) et avec une unité de commande pour piloter l'émetteur (28)
et/ou au moins un récepteur (30) qui reçoit des rayons de lumière reçue, avec un élément récepteur (14) et avec une unité d'évaluation pour générer un signal de constatation d'objet en dépendance de signaux reçus présents à la sortie du récepteur (30),
comprenant une carte à circuits imprimés (18, 18'), de sorte qu'un axe optique des rayons de lumière reçue ou des rayons de lumière émise est guidé au moins localement environ parallèlement à la carte à circuits imprimés (18, 18'),
la carte à circuits imprimés, une surface d'émission de l'élément émetteur et/ou une surface de réception de l'élément récepteur s'étendent environ parallèlement les unes aux autres,
**caractérisé en ce qu'**il est prévu au moins un prisme (2, 2') à titre d'unité de déflexion pour les rayons de lumière émise et/ou les rayons de lumière reçue sur environ 90° en raison d'une réflexion totale, agencé à une distance de 0 mm à 3 mm devant l'élément émetteur et/ou l'élément récepteur, et le prisme (2, 2') présente un indice de réfraction supérieur à 1,4.

2. Capteur optoélectronique selon la revendication 1, **caractérisé en ce que** le prisme (2, 2') étant polyméthyle méthacrylate (PMMA), en polycarbonate (PC) ou en verre.

3. Capteur optoélectronique selon l'une des revendications précédentes, **caractérisé en ce qu'**il est prévu un premier diaphragme (4, 4') entre l'élément émetteur (16) ou l'élément récepteur (14) et le prisme (2, 2') pour limiter l'angle d'ouverture.

4. Capteur optoélectronique selon l'une des revendications précédentes, **caractérisé en ce qu'**il est prévu devant le prisme (2, 2') un second diaphragme (6, 6') pour éviter une diaphonie optique entre les canaux.

5. Capteur optoélectronique selon l'une des revendications précédentes, **caractérisé en ce qu'**il est prévu un autre troisième diaphragme (8, 8') agencé devant le diaphragme (6, 6') pour limiter le diamètre du rayon.

6. Capteur optoélectronique selon l'une des revendications précédentes, **caractérisé en ce que** le troisième diaphragme (8, 8') et le boîtier (20, 20') sont réalisés d'une seule pièce.

7. Capteur optoélectronique selon l'une des revendications précédentes, **caractérisé en ce qu'**une lentille (10, 10') destinée à la mise en forme des rayons est agencée devant le prisme (2, 2'), en particulier à une distance de 5 mm à 20 mm.

8. Capteur optoélectronique selon l'une des revendications précédentes, **caractérisé en ce que** la lentille (10, 10') a un diamètre de 4 à 8 mm, et de préférence environ 6 mm pour une distance focale d'environ 16 mm.

9. Capteur optoélectronique selon l'une des revendications précédentes, **caractérisé en ce qu'**une plaque frontale (12, 12') est agencée devant le prisme (2, 2').

10. Capteur optoélectronique selon l'une des revendications précédentes, **caractérisé en ce qu'**un support optique d'une seule pièce est agencé pour recevoir au moins la lentille (10, 10') et le prisme (2, 2').

11. Capteur optoélectronique selon l'une des revendications précédentes, **caractérisé en ce que** l'élément émetteur (16) et/ou l'élément récepteur (14) est intégré dans la carte à circuits imprimés (18, 18').

12. Capteur optoélectronique selon l'une des revendications précédentes, **caractérisé en ce que** celui-ci est réalisé sous forme de barrière lumineuse, avec une pluralité de paires émetteur/récepteur (28, 30) espacées.
